# EUROPEAN PATENT APPLICATION

(11) **EP 1 770 949 A2**
(43) Date of publication of application: **04.04.2007**
(21) Application number: 06121565.3
(22) Date of filing: 29.09.2006
(51) Int. Cl.: H04L 29/06, H04M 7/00

(54) **Method and communication system for circuit switch users accessing IP multimedia subsystem**

(30) Priority: 30.09.2005 CN 200510105904
(71) Applicant: Huawei Technologies Co., Ltd., Longgang District, Shenzhen, Guangdong 518129 (CN)
(72) Inventor: Dongming, Zhu Huawei Technologies Co., Ltd., Shenzhen, Guangdong 518129 (CN); Hengliang, Zhang Huawei Technologies Co., Ltd., Shenzhen, Guangdong 518129 (CN)
(74) Representative: Plougmann & Vingtoft A/S

(57) **Abstract**

The present invention discloses a method for a CS domain user accessing an IMS domain, including: an access gateway control function (AGCF) entity maps CS domain signaling messages forwarded by a mobile switch center (MSC)/visiting location register (VLR) to session initiation protocol (SIP) signaling messages and transmits the SIP signaling messages to a call session control function (CSCF) entity in the IMS domain; the AGCF entity maps the SIP signaling messages transmitted from the IMS domain to the CS domain to the CS domain signaling messages and then transmits the CS domain signaling messages to the MSC/VLR. The present invention also discloses a communication system and an AGCF entity. Compared with the prior art, the present invention requires less updating and reconstruction of the existing network and is applicable for the CS domain users of R99 version or prior to R99 version to access the IMS domain.

## Description

### FIELD OF THE INVENTION

The present invention relates to communication technology, and more particularly to a method and a communication system for interconnection between Circuit Switch (CS) domain and IP Multimedia Subsystem (IMS).

### BACKGROUND OF THE INVENTION

The IMS is a multimedia subsystem in a Wideband Code Division Multiple Access (WCDMA) network defined by the 3rd Generation Partnership Project (3GPP) R5/R6 specifications, and is an object network for the 3rd Generation (3G) mobile network to realize packet voice and packet data and to provide uniform multimedia service and application.

Generally, the IMS adopts the IP packet domain as carrier channel for controlling signaling and media transmission and adopts the Session Initiation Protocol (SIP) as call control signaling in order to realize separation of service management, call control and carrier access.

In the IMS, service is entirely provided by an application server (AS), and the call control is performed by a call session control function (CSCF), while the above two parts are completely separated in network architecture. The CSCF triggers the service to the ASs and the ASs can cooperate with each other to process the service. The CSCF entity is a core device of the IMS and can be divided into three logic entities according to specific functions, including a Serving CSCF (S-CSCF) entity, for performing call control, maintaining call status, managing user information and generating billing information etc.; an interrogating CSCF (I-CSCF) entity, for connecting the IMS domains, managing the allocation of S-CSCF, shielding network topology architecture and configuration information from the outside and generating billing information etc.; a proxy CSCF (P-CSCF) entity, which is an entry for a user to access the IMS, and used for user registration, service quality control and security management etc.. Here, one or more S-CSCF entities can be set according to the requirement.

A user may access the IMS through the P-CSCF of a visiting domain node at the current location, and the call control and the service control are carried out by a home domain node of the registered location, so that the user can obtain the same service in different access places. The call control and service control functions of the IMS are independent of the access and the home subscriber server (HSS) manages the registered data of an IMS user.

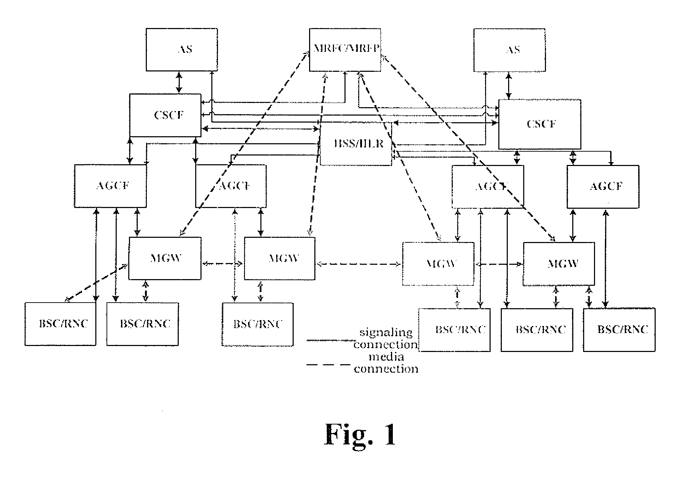

Conventionally, in order to connect a CS domain user to the IMS domain, an access gateway control function (AGCF) entity is generally introduced into the CS domain visited office. Fig. 1 is a diagram of the network architecture showing a CS domain user accesses to the IMS domain. The AGCF entity may realize the following functions: processing the signaling interconnected with the wireless access network CS domain; processing the SIP signaling interconnected with the IMS domain; processing the switch between the wireless access network CS domain signaling and the IMS domain SIP signaling, wherein the AGCF call route is carried out by the IMS; and controlling a media gateway (MGW) to perform the media stream switch and route.

In the above solution, an AGCF entity is introduced into the visited MSC/VLR to connect a CS domain user to the IMS domain, therefore it will cost a lot of work to update and reconstruct the existing network. Besides, it is necessary to separate the carrier and the control function when the user of the R99 CS domain or the CS domain of a version before the R99 where the carrier and control are combined or the user under time division multiplex (TDM) accesses the IMS domain.

### SUMMARY OF THE INVENTION

The present invention provides a method and a communication system for a Circuit Switch (CS) domain user accessing an IP Multimedia Subsystem (IMS) domain, and another aspect of the present invention provides an access gateway control function entity, which substantially solve the above problem and may require less updating and reconstruction as to the existing network.

To achieve the above and other objects, the present method for a CS domain user accessing an IMS domain, includes that an access gateway control function (AGCF) entity maps CS domain signaling messages forwarded by a mobile switch center (MSC)/visiting location register (VLR) into session initiation protocol (SIP) signaling messages and transmits the SIP signaling messages to a call session control function (CSCF) entity in the IMS domain; and the AGCF entity maps the SIP signaling messages transmitted from the IMS domain to the CS domain into the CS domain signaling messages and then transmits the CS domain signaling messages to the MSC/VLR.

In particular, the CS domain signaling messages forwarded by the MSC/VLR may include: a CS domain user location update message or a CS domain user switch message or a CS domain calling party call request message or a CS domain supplementary service notification message or a CS domain call forwarding type notification message or a calling number display/calling number display restriction control signaling message or a called number display/called number display restriction control signaling message.

According to an embodiment, when the CS domain signaling message is a CS domain user location update message, the AGCF entity performs registration in the IMS domain on behalf of the CS domain user and the registration further includes that the AGCF entity maps the received CS domain user location update message into an SIP registration message and transmits the message to the CSCF entity; and the AGCF entity maps a response message to the registration message by the CSCF entity to a CS domain location update response message and transmits the message to the MSC/VLR.

According to an embodiment, when a CS domain user registers in the IMS domain, the user has to be authenticated in the IMS domain and the CSCF entity initiates the authentication according to a local configuration data policy. The authentication further includes that the AGCF entity maps an authentication challenge request message in the IMS domain from the CSCF entity into a CS domain authentication challenge request message and transmits the CS domain authentication challenge request message to the MSC/VLR; and the AGCF entity maps a user terminal authentication challenge response message forwarded by the MSC/VLR into an IMS domain authentication challenge response message and transmits the IMS domain authentication challenge response message to the CSCF entity.

According to an embodiment, when a CS domain user registers in the IMS domain, the AGCF entity needs to obtain the mobility management signaling in the CS domain. Particularly, the above process may include that transmitting the messages transmitted between the CS domain MSC/VLR and the home location register (HLR) to the AGCF entity and then the AGCF entity transferring the messages to the peer end; or the CS domain MSC/VLR or HLR transmitting the mobility management signaling in the CS domain directly to the AGCF entity.

According to another embodiment, when the CS domain signaling message forwarded by the MSC/VLR is a CS domain Hand Over message, the AGCF entity maps the Hand Over message into an SIP switch message and then transmits the message to a CSCF entity and the CSCF entity transfers the message to the service server in the IMS domain.

According to still another embodiment, when the CS domain signaling message forwarded by the MSC/VLR is a CS domain originating call request message, the AGCF entity maps the message into an SIP call request message and then transmits the message to an object S-CSCF entity and the object S-CSCF entity triggers the calling party service.

Further, the determination of the address of the object S-CSCF entity includes that when the AGCF has registers in the IMS domain for a calling party, a proxy CSCF (P-CSCF) entity determines the address of the object S-CSCF according to the path information formed during the calling party's registration in the IMS domain; and when the AGCF hasn't registered in the IMS domain for a calling party, the P-CSCF entity determines the address of the object S-CSCF according to the local data configuration.

According to further another embodiment, when the SIP signaling message transmitted from the IMS domain to the CS domain is a call request message toward a CS domain user, the AGCF entity maps the call request message into a CS domain call request message and transmits the message to the called party's current MSC/VLR.

Particularly, the determination of the address of the object AGCF entity includes that when the AGCF registers in the IMS domain for a called party, the CSCF entity determining the address of the object AGCF according to the information stored in the home subscriber server (HSS) and the Path information formed during called party's registration in the IMS domain; and when the AGCF hasn't registered in the IMS domain for a called party, the CSCF entity determining the address of the object AGCF according to the local data configuration.

And, the determination of the address of the called party's current MSC/VLR includes that when the AGCF entity receives the SIP call request message, it queries the roaming number of the called party in the HLR and determining the address of the called party's current MSC/VLR according to the response information from HLR.

According to another embodiment, when the AGCF maps the CS domain signaling message forwarded by the MSC/VLR into the SIP signaling message, the AGCF transforms the user's CS domain international mobile subscriber identification (IMSI) number to the IMS private user identity information and transforms the user's CS domain number to one or more IP multimedia public user identities (IMPU) in the IMS domain.

According to another embodiment, when the CS domain message forwarded from the AGCF entity to the MSC/VLR is a special operation by the user, the message transmission between the MSC/VLR and the AGCF is performed through the unstructured supplementary services data (USSD) channel.

According to another embodiment, when the CS domain message received by the AGCF entity is a message constituted by signaling and media, the signaling message and the media message are separated and the media message is transmitted to the media gateway (MGW).

According to another embodiment, when the CS domain message received by the AGCF entity is a message constituted by signaling and media, it controls the MGW to modify the media port and media stream.

According to the embodiments, the above method also includes that the AGCF entity performing the media renegotiation according to the media stream redirection and the change of the receiving and transmitting mode initiated by the re-INVITE/UPDATE from the peer end; or the AGCF entity receiving the call hold/recovery notification realized by the SIP UPDATE and opening/closing the transmission media channel according to the session description protocol (SDP) indication and according to the policy decision function (PDF) interaction; or when the AGCF entity receives the peer end transfer indication, it holding the status of its terminal, initiating a new connection, switching the terminal connection according to the subsequent indication and releasing the former connection; or when the AGCF entity receives the SIP redirection indication, it holding the status of its user, reinitiating call establishment request towards the redirected party; and playing an indication tone for its user according to the service requirement.

The present invention further provides a communication system, including an IMS domain network system that includes a CSCF entity for routing and controlling calls; an AGCF entity, set between the MSC/VLR and the CSCF entity, for mapping CS domain signaling messages forwarded by an MSC/VLR into SIP signaling messages and transmits the SIP signaling messages to a CSCF entity; and for mapping the SIP signaling messages transmitted from the CSCF entity to the CS domain into the CS domain signaling messages and then transmits the CS domain signaling messages to the MSC/VLR, wherein the AGCF entity is connected with one or more MSCs/VLRs.

According to an embodiment, the above AGCF entity further includes a CS domain signaling processing module, for processing calls and mobility management messages between the MSC/VLR and the HLR; a signaling transforming module, connected with the CS domain signaling processing module and IMS agent module, for transforming between the MSC/VLR, HLR CS domain signaling messages and the IMS SIP signaling messages; an IMS agent module, connected with the signaling transforming module, for registering, unregistering, periodically registering in the IMS domain, processing the response message, transmitting and receiving messages for the CS domain user.

In the AGCF entity, an interface between the AGCF entity and the MSC/VLR is a call control interface or a mobile application part (MAP) interface.

According to an embodiment, the AGCF entity may also include a media gateway control (MGWC) unit connected with the CS domain MGW for controlling the MGW, and for separating the message constituted by the signaling and carrier transmitted from the MSC/VLR to signaling and media and transmitting the media to the MGW

The present invention further provides an AGCF entity, including a CS domain signaling processing module, for processing calls and mobility management messages between the MSC/VLR and the HLR; a signaling transforming module, connected with the CS domain signaling processing module and IMS agent module, for transforming between the MSC/VLR, HLR CS domain signaling messages and the IMS SIP signaling messages; an IMS agent module, connected with the signaling transforming module, for registering, unregistering, periodically registering in the IMS domain, processing the response message, transmitting and receiving messages for the CS domain user.

The present invention introduces an AGCF entity to the tandem office, which solves the problem that when an AGCF entity is introduced to the visited MSC/VLR, which is, a lot of work may be required to update and reconstruct the existing network. Additionally, in the present invention, the AGCF entity controls the MGW and separates the signaling message and the media message that are previously combined together, thereby providing a solution to access the IMS domain for the user of the R99 version CS domain or the CS domain of the version before R99 where the carrier and control are combined, and for the user under time division multiplex (TDM). The present invention provides a simple solution.

According to the present invention, the mobile network CS domain user can be accessed to the IMS domain fast, so that the user can be managed by the IMS network and can be provided with service based on the IMS uniform and open service architecture.

### BRIEF DESCRIPTION OF THE DRAWINGS

Fig. 1 is an architecture diagram showing a network in which a CS domain user is accessed to an IMS domain according to the prior art;
Fig. 2 is an architecture diagram showing a network in which a CS domain user is accessed to an IMS domain according to an embodiment of the present invention;
Fig. 3 is an architecture diagram showing an AGCF entity according to an embodiment of the present invention;
Fig. 4 is a flow chart showing a CS domain user initially registers to an IMS domain according to an embodiment of the present invention;
Fig. 5 is a flow chart showing a CS domain user unregisters from IMS according to an embodiment of the present invention;
Fig. 6 is a flow chart showing a CS domain user initiates a call and establishes a session according to an embodiment of the present invention;
Fig. 7 is a flow chart showing an establishment of a call when a CS domain user is a called party according to an embodiment of the present invention;
Fig. 8 is an architecture diagram showing a network in which a CS domain user is accessed to an IMS domain according to another embodiment of the present invention.

### DETAILED DESCRIPTION OF THE PREFERRED EMBODIMENTS

It should be noted that the CSCF entity in the present invention refers to a call session control unit defined in the R5/R6 version of the 3GPP, including the P-CSCF entity, S-CSCF entity and I-CSCF entity, etc..

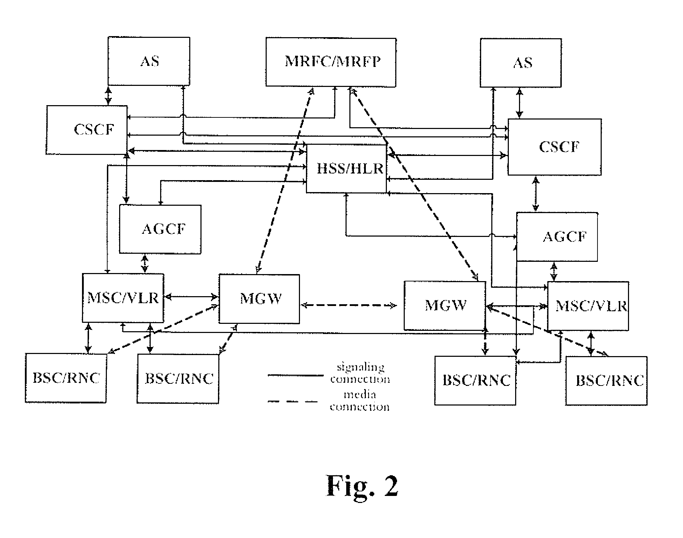

Fig. 2 is an architecture diagram showing a network in which a CS domain user is accessed to an IMS domain. In this network, an AGCF entity is introduced in a CS domain tandem office and the AGCF entity is connected with a CS domain mobile switch center /visiting location register (MSC/VLR), with an IMS domain CSCF entity and with an HLR; an interface between the AGCF entity and the MSC/VLR is a call control interface and/or a mobile application part (MAP) interface and the call control interface includes but is not limited to an ISUP interface and a BICC interface; an interface between the AGCF and the HLR may be an MAP interface.

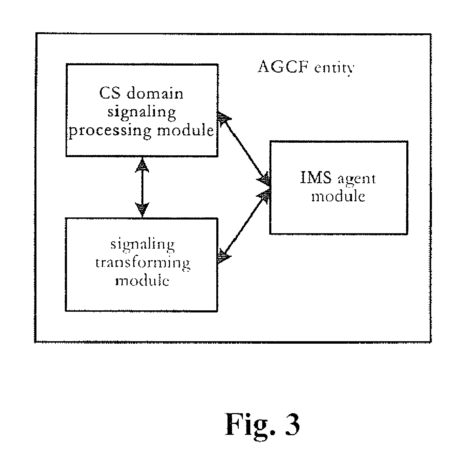

The architecture of the AGCF entity is shown in Fig.3, and includes: a CS domain signaling processing module, a signaling transforming module and an IMS agent module, wherein: the CS domain signaling processing module is for processing calls and mobility management messages between the MSC/VLR and the home location register (HLR); the mobility management messages include but are not limited to ISDN user part (ISUP) messages, bearer independent call control protocol (BICC) messages or MAP messages.

The signaling transforming module is for transforming between the MSC/VLR, HLR CS domain signaling messages and the IMS SIP signaling messages.

The IMS agent module is for registering, unregistering, periodically registering in the IMS domain, processing the response message, transmitting and receiving messages for the CS domain user.

When the CS domain user accesses the IMS domain network, the AGCF entity and the CSCF entity may be set to independent physical entities and connected by outside interfaces such as an SIP interface; the AGCF entity and the CSCF entity may be set to a same physical entity and connected by an inner interface. In order to support the IMS billing, the interface between the AGCF entity and a counting control function (CCF) entity should support the Diameter protocol; the CCF entity is an existing function entity in the IMS domain and is for collecting CDRs in the IMS domain.

Before a CS domain user accesses the IMS domain, the AGCF entity may choose whether to register in the IMS domain for the CS domain user according to the preset data configuration policy and may record path information formed during registration; the registration includes an initial registration, unregistering, and periodical registration. The process of the AGCF entity registers in the IMS domain for the CS domain user will be described as follows.

1) Initial registration: when a user powers on the mobile phone or roams from one AGCF entity to another, it needs to perform the initial registration so as to finish the registration in the IMS domain.

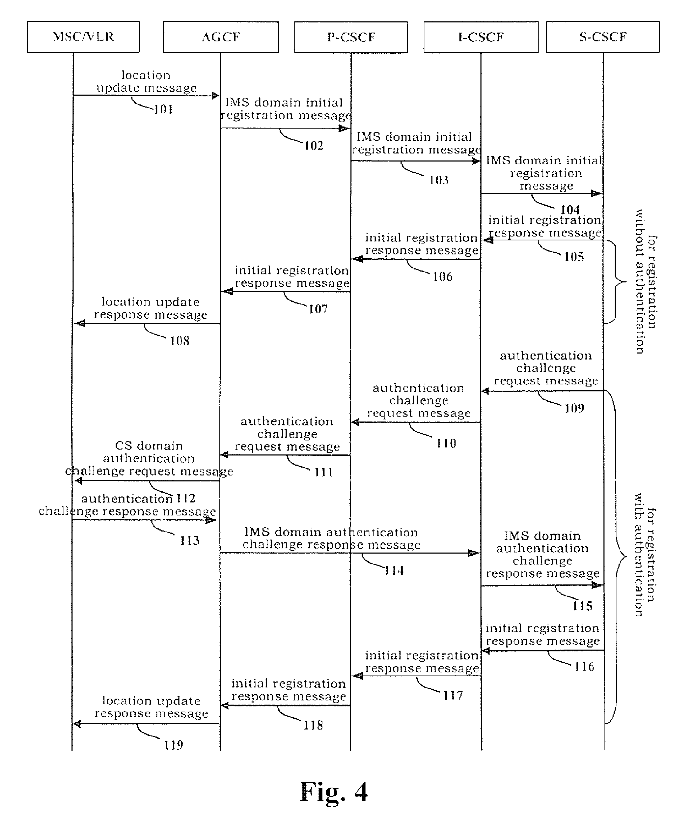

In the CS domain, after the MSC/VLR obtains the user location update message transmitted by the base station controller/radio network controller (BSC/RNC), it forwards this message to AGCF, and the AGCF performs registration in the IMS domain and the registration process is shown in Fig. 4, which includes steps as follows.

In step 101, the MSC/VLR transmits the user location update message to the AGCF entity.

In this step, if it is the initial registration when the user powers on the mobile phone, the location update message is the one for the international mobile subscriber identification number (IMSI) attach; if it is the initial registration when the user roams from one AGCF entity to another, the location update message is the user roaming location update message.

In step 102, the AGCF entity maps the location update message into the initial registration message in the IMS domain; the AGCF obtains the home domain information of the user according to the mobile station ISDN (MSISDN) or the IMSI, obtains the address information of the object P-CSCF entity and transmits the IMS domain initial registration message to the object P-CSCF entity; in the above process, the AGCF entity transforms the CS domain user's IMSI number to the IP multimedia private identity (IMPI) and transforms the CS domain user number to one or more IP multimedia public identities (IMPU) so as to finish the management of mapping from the CS domain to the IMS domain.

It should be noted that if the AGCF entity and the P-CSCF entity are set in the same physical entity by the inner interface, the AGCF entity may directly determine the address information of the object P-CSCF entity.

In step 103, the object P-CSCF entity queries the address information of the user home object I-CSCF according to the local data configuration information and transmits the initial registration information to the object I-CSCF entity.

In step 104, the object I-CSCF entity queries the HSS and obtains the address information of the object S-CSCF entity which will process the user's initial registration information; or the object I-CSCF entity queries the HSS and obtains the capability information of the S-CSCF entity which will process the user's registration information and the object I-CSCF entity allocates an object S-CSCF entity according to the capability information of the S-CSCF entity; the object I-CSCF entity transmits the user's initial registration information to the determined object S-CSCF entity; the object S-CSCF entity determines whether to authenticate the user's registration information in the IMS domain according to the preset policies such as the local configuration data and if the authentication is not needed, proceeds to step 105-step 108; otherwise, proceeds to step 109-step 119.

In step 105, the object S-CSCF entity transmits the initial registration response message to the object I-CSCF entity.

In step 106, the object I-CSCF entity transfers the initial registration response message to the object P-CSCF entity.

In step 107, the object P-CSCF entity transfers the initial registration response message to the AGCF entity.

In step 108, the AGCF entity maps the initial registration response message into the location update response message and transmits the message to the MSC/VLR, which will then transfer the message to the user terminal.

In step 109, the object S-CSCF entity transmits the authentication challenge request message to the object I-CSCF entity.

In step 110, the object I-CSCF entity transfers the authentication challenge request message to the object P-CSCF entity.

In step 111, the object P-CSCF entity transfers the authentication challenge request message to the AGCF entity.

In step 112, the AGCF entity maps the IMS domain authentication challenge request message into the CS domain authentication challenge request message and transmits the message to the MSC/VLR, which will then transfer the message to the user terminal.

In step 113, the MSC/VLR transfers the authentication challenge response message transmitted by the user terminal to the AGCF entity.

In step 114, the AGCF entity maps the user's authentication challenge response message into the IMS authentication challenge response message and transmits the message to the object I-CSCF entity.

In step 115, the object I-CSCF entity transfers the authentication challenge response message to the object S-CSCF entity.

In step 116, the object S-CSCF entity determines when the user has got authenticated and if the user is authenticated, the object S-CSCF entity transmits the initial registration response message to the object I-CSCF entity.

In step 117, the object I-CSCF entity transfers the initial registration response message to the object P-CSCF entity.

In step 118, the object P-CSCF entity transfers the initial registration response message to the AGCF entity.

In step 119, the AGCF entity maps the initial registration response message into the location update response message and transmits the message to the MSC/VLR, which will then transmit the message to the user terminal.

It should be noted that the steps 109-116 are the process when the CS domain user gets authenticated in the IMS domain, wherein the user may choose to get authenticated in the CS domain also. Since the authentication in the CS domain belongs to the prior art, it will not be described in detail here.

2) Unregistering: when the user has already got the location registered and it needs to cancel the location registration, it needs to unregister.

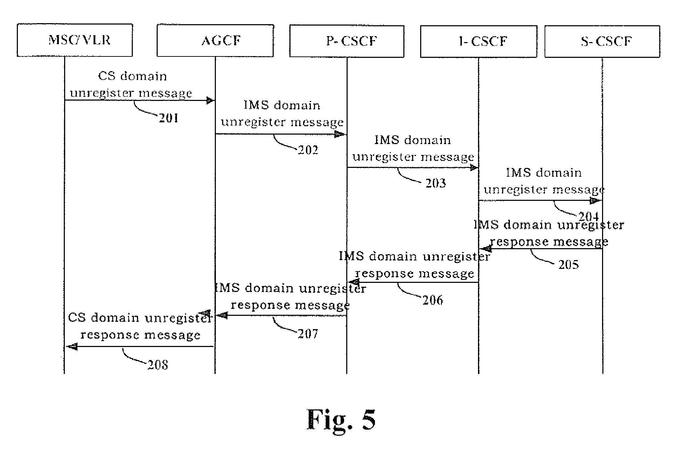

In the CS domain, when the MSC/VLR obtains the user's Purge message or the network Cancel Location message transmitted by the BSC/RNC, the unregistering process of the user in the IMS domain when it doesn't need to get authenticated is shown if Fig. 5, including the following steps:
In step 201, the MSC/VLR transmits the user's Purge message or the network Cancel Location message to the AGCF entity.
In step 202, the AGCF entity maps the user's Purge message or the network Cancel Location message into the unregistering message in the IMS domain; the AGCF obtains the home domain information of the user according to the MSISDN or the IMSI, obtains the address information of the object P-CSCF entity and transmits the IMS domain unregister registration message to the object P-CSCF entity; in the above process, the AGCF entity transforms the CS domain user's IMSI number to the IMS domain personal information (IMPI) and transforms the CS domain user number to one or more IP multimedia public identities (IMPU) so as to finish the management of mapping from the CS domain to the IMS domain.
It should be noted that if the AGCF entity and the P-CSCF entity are set in the same physical entity by the inner interface, the AGCF entity may directly determine the address information of the object P-CSCF entity.
In step 203, the object P-CSCF entity queries the address information of the user home object I-CSCF according to the local data configuration information and transmits the unregister information to the object I-CSCF entity.
In step 204, the object I-CSCF entity queries the HSS and obtains the address information of the object S-CSCF entity which will process the user's unregistration information; the object I-CSCF entity transmits the user's unregistering information to the determined object S-CSCF entity.
In step 205, the object S-CSCF entity transmits the unregister response message to the object I-CSCF entity.
In step 206, the object I-CSCF entity transfers the unregister response message to the object P-CSCF entity.
In step 107, the object P-CSCF entity transfers the unregister response message to the AGCF entity.
In step 208, the AGCF entity maps the unregister response message into the CS domain response message and transmits the message to the MSC/VLR, which will then transfer the message to the user terminal.

After the above steps, the CS domain user is unregistered from the IMS domain. In the above steps, the user's Purge message or the network Cancel Location message may be regarded as the user's location update message.

It should be noted that, similar to the initial registration of the CS domain user in the IMS domain, in the unregister process, the CS domain user may be authenticated in the IMS domain and/or CS domain and the method is similar to that in the initial registration so will not be described in detail here.

3) Periodical registration: when the user needs to update the location periodically or the user roams in the same AGCF entity, it needs to perform periodic register.

In the CS domain, after the MSC/VLR obtains the location update message transmitted by the BSC/RNC because of the user's periodical update or roaming in the same AGCF entity, the AGCF performs periodic registration in the IMS domain. Since the method is similar to that of the initial registration, the periodic registration will not be described in detail here.

When the AGCF entity unregisters or periodically registers in the IMS domain for the CS domain user, the AGCF entity needs to obtain the CS domain user's mobility management signaling.

The AGCF entity may obtain the CS domain user's mobility management signaling by methods as will be described below.
1) Modifying the data configuration of the MSC/VLR and HLR: transmitting the MAP message former aimed to the HLR to the AGCF entity; at the same time transmitting the signaling former aimed to the MSC/VLR to the AGCF entity. The mobility management signaling is obtained by setting the AGCF entity between the MSC/VLR and the HLR. In this method, the software of the MSC/VLR and the HLR doesn't need to be updated so that may reduce the effect on the existing network.
2) The CS domain MSC/VLR or HLR may transmit the CS domain mobility management signaling to the AGCF entity directly. In this process, the mobility management signaling may be filtrated according to the requirement of the AGCF entity and the filtrated signaling will be transmitted to the AGCF entity.

Before the CS domain user accesses the IMS domain, the CS domain user may choose to get authenticated in the CS domain. Since the authentication in the CS domain belongs to the prior art, it will not be described in detail here.

The methods for the CS domain user to access the IMS domain will be described in detail one by one.

### 1. A CS domain user initiating a call and establishing a session

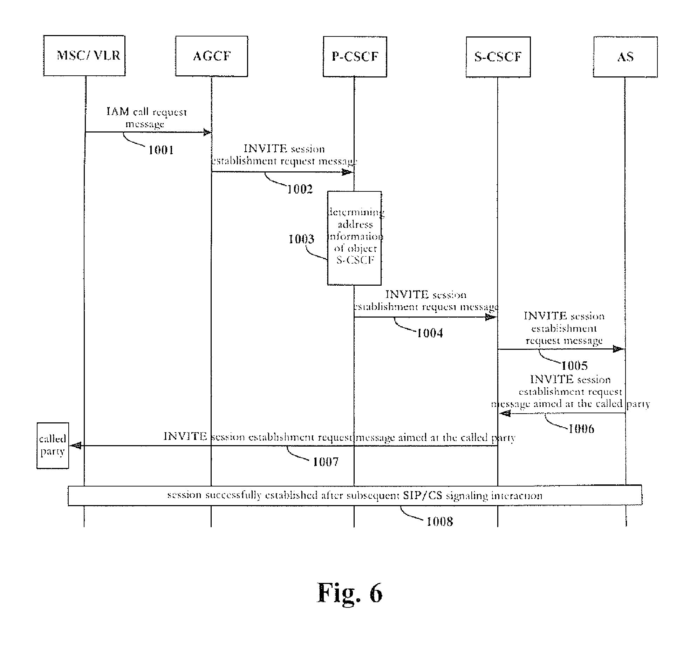

Fig. 6 is a flow chart showing a CS domain user initiates a call and establishes a session according to an embodiment of the present invention, and the process includes the following steps:
In step 1001, the MSC/VLR transmits an initial address message (IAM) call request message to the AGCF entity.
In step 1002, the AGCF entity maps the IAM call request message into an SIP INVITE message and transmits the INVITE message to the object P-CSCF entity according to the local data configuration information.
In step 1003, if the CS domain user has already registered in the IMS domain, the object P-CSCF entity determines the address of the object S-CSCF entity according to the path formed during registration process; if the CS domain user hasn't registered in the IMS domain, the object P-CSCF entity determines the address of the object S-CSCF entity according to the local data configuration.
In step 1004, the object P-CSCF entity transmits the INVITE message to the object S-CSCF entity.
In step 1005, the object S-CSCF entity detects the trigger of the service, if the service is successfully triggered, the object S-CSCF entity routes the INVITE message to the AS and the step 1006 begins; if service is not triggered, the object S-CSCF entity routes the INVITE message to the called network.
In step 1006, the AS performs the session control according to the service logic and transmits the INVITE message aimed at the called party to the object S-CSCF entity.
In step 1007, the object S-CSCF entity transmits the INVITE message aimed at the called party to the called network.
In step 1008, the session is successfully established after the subsequent SIP/CS signaling interaction.

### 2. The establishment of the session when a CS domain user is a called party

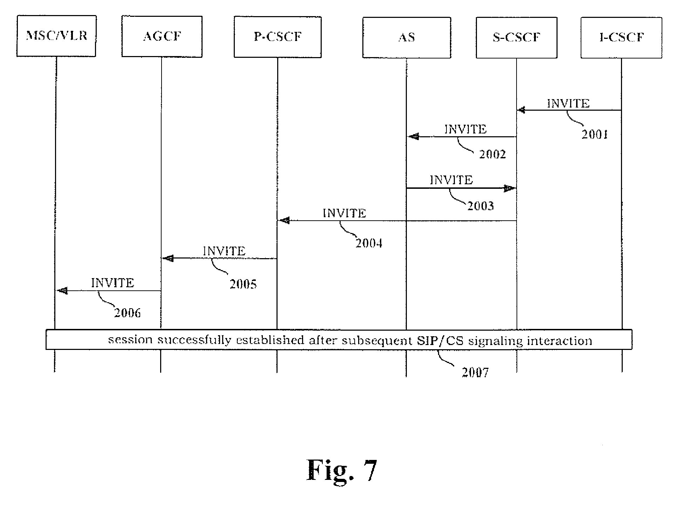

Fig. 7 is a flow chart showing an establishment of a call when a CS domain user is a called party according to an embodiment of the present invention, and the process includes the following steps:
In step 2001, when the I-CSCF entity in the called network receives the INVITE message from the calling network and if the called party has already registered in the IMS domain, the I-CSCF entity queries the address information of the object S-CSCF entity in the HSS; if the called party hasn't registered in the IMS domain, the I-CSCF entity determines the address of the object S-CSCF entity according to the local configuration data; then, the I-CSCF entity transmits the INVITE message to the object S-CSCF entity.
In step 2002, the object S-CSCF entity detects the trigger of the service, if the service is successfully triggered, the object S-CSCF entity routes the INVITE message to the AS.
In step 2003, the AS performs the service logic control and transmits the INVITE message to the object S-CSCF entity.
In step 2004, if the called party has already registered in the IMS domain, the object S-CSCF entity determines the address of the object P-CSCF entity according to the path of the registration process; if the called party hasn't registered in the IMS domain, the object S-CSCF entity determines the address of the object P-CSCF entity according to the local configuration data; then, the object S-CSCF entity transmits the INVITE message to the object P-CSCF entity.
In step 2005, if the called party has already registered in the IMS domain, the object P-CSCF entity determines the address of the AGCF entity according to the path of the registration process; if the called party hasn't registered in the IMS domain, the object P-CSCF entity determines the address of the AGCF entity according to the load sharing policy; then, the object P-CSCF entity transmits the INVITE message to the AGCF entity.
In step 2006, after the AGCF entity receives the INVITE message, it queries the user's roaming number in the HLR and determines the address of the object MSC/VLR; then, the AGCF entity maps the INVITE message into the IAM message and transmits the IAM message to the object MSC/VLR.
In step 2007, the session is successfully established after the subsequent SIP/CS signaling interaction.

### 3. Realizing the CS domain characteristic services in the IMS domain

The MSC/VLR receives the special operation from the CS domain user and transmits the operation to the AGCF entity by the unstructured supplementary services data (USSD) channel. The AGCF entity maps the special operation into an SIP message and routes the SIP message to the related entity in the IMS domain so as to realize the characteristic service.

### 4. Realizing the SIP characterized session enhancing control function in the IMS domain

The SIP characterized session enhancing control function can be realized in the IMS domain so as to support the interconnection and share of the CS domain user and the standard IMS domain user, wherein: the AGCF entity maps the received information from the MSC/VLR into the SIP information and then transmits the SIP information to the CSCF entity, which will then routes the SIP information to the related entity in the IMS domain.

The realization of the SIP characterized session enhancing control function in the IMS domain includes:
(1) The AGCF entity maps the received CS domain calling number display/calling number display/restriction control signaling into the IMS domain SIP calling number display/calling number display restriction control signaling;
(2) The AGCF entity maps the received CS domain called number display/called number display/restriction control signaling into the IMS domain SIP called number display/called number display restriction control signaling;
(3) The AGCF entity performs the renegotiation according to the media stream redirection and the change of the receiving and transmitting mode initiated by the re-INVITE/UPDATE from the peer end;
(4) The AGCF entity receives the call hold/resume notification realized by the SIP UPDATE and opens/closes the transmission media channel according to the session description protocol (SDP) indication and according to the policy decision function (PDF) interaction;
(5) When the AGCF entity receives the REFER indication, it holds the its terminal, establishes a new connection towards the new party, switches the former connection to the new established one according to the subsequent indication and releases the former connection;
(6) When the AGCF entity receives the SIP redirection indication, it holds the status of its user, reinitiating call establishment request towards the new party; and plays an indication tone for its user according to the service requirement.

Since the present embodiment introduces the AGCF entity to the tandem office so as to make the CS domain user be accessed to the IMS domain, there's less work to update and reconstruct the existing network.

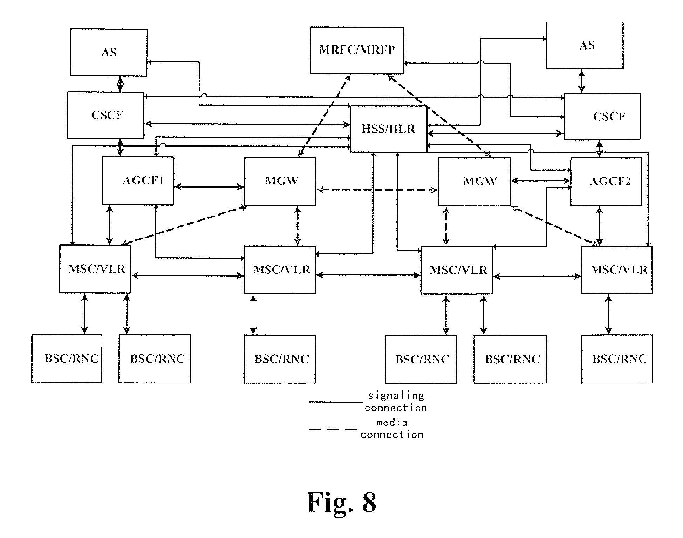

Fig. 8 is an architecture diagram showing another network in which a CS domain user is accessed to an IMS domain. The differences between this architecture and the first embodiment are: the AGCF entity is also connected with the MGW and controls MGW, the AGCF entity separates the signaling message and the media message from CS signaling with the signaling and carrier combined; the interface between the AGCF entity and the MGW is the control interface between the media gateway controller (MGC) and the MGW and includes but is not limited to the media gateway control protocol (MGCP) and the H. 248 protocol interface.

In the above network, the AGCF entity includes not only the above CS domain signaling processing module, the signaling transforming module and the IMS agent module, but also an MGW control module for controlling the MGW, for separating the combined signaling message and media message and for transmitting the media message to the MGW. This network is applicable to the R99 CS domain user and to the CS domain user of the version before R99.

In the network where the CS domain user accesses the IMS domain according to the present embodiment, the registration, the establishment of the session when the CS domain user initiates the call, the establishment of the session when the CS domain user is the called party, the realization of the CS domain characteristic service in the IMS domain and the realization of the SIP characterized session enhancing control function in the first embodiment can be realized and the implementation is the same with that in the first embodiment so will not be described in detail here.

When the CS domain signaling message received by the AGCF in the network is the message combined by the signaling and media carrier, the AGCF entity controls the MGW to modify the media port and media stream.

The present embodiment shows in this method the AGCF entity controls the MGW and separates the combined signaling message and media message. This method solves the problem when the user of the R99 CS domain or of the version before the R99 CS domain where the carrier and control are combined and the time division multiplex (TDM) user access the IMS domain.

In the above first and second embodiments, in the service processing in the IMS domain, the AGCF entity generates the billing request information according to the uniform requirement of the IMS and transmits the billing request information to the CCF entity so as to finish billing.

If the CS domain signaling message transferred by the MSC/VLR is the CS domain supplementary service notification message or the CS domain call forwarding type notification message, the AGCF maps the above CS domain signaling message into the IMS domain SIP signaling message and transmits message to the CSCF, which will then route the message to other related entities.

For the above first and second embodiments, one point is that if the CS domain user hands over, in order for the AS to perform different logic control according to the user's information, the AS needs to obtain the user's hand over information. Since the hand over is achieved by the signaling interaction between the MSCs/VLRs, when the user is in the process of handing over, the AGCF entity obtains the signaling hand over message between the MSCs/VLRs and notifies the AS. In this process, the method for the AGCF entity to obtain the signaling hand over message between the MSCs/VLRs can be the one in the first embodiment by which the AGCF entity obtains the CS domain user's mobility management signaling; the AS may obtain the signaling hand over message between the MSCs/VLRs by subscribing from the AGCF entity and when the AGCF entity obtains the signaling hand over message, it transmits the message to the AS in the manner of the notification.

It will be apparent to those skilled in the art that various modifications and variations can be made in the present invention. Thus, it is intended that the present invention covers the modifications and variations of this invention provided they come within the scope of the appended claims and their equivalents.

## Claims

1. A method for a Circuit Switch (CS) domain user accessing an IP Multimedia Subsystem (IMS) domain, comprising
mapping CS domain signaling messages forwarded by a mobile switch center (MSC)/ visiting location register (VLR) into session initiation protocol (SIP) signaling messages by an access gateway control function (AGCF) entity, and transmitting the SIP signaling messages to a call session control function (CSCF) entity in the IMS domain; and
mapping SIP signaling messages transmitted from the IMS domain to the CS domain into respective CS domain signaling messages by the AGCF entity, and transmitting said respective CS domain signaling messages to the MSC/VLR.

2. The method according to claim 1, wherein
the CS domain signaling messages forwarded by the MSC/VLR comprise: a CS domain user location update message, or a CS domain user hand over message, or a CS domain originating party call request message, or a CS domain supplementary service notification message, or a CS domain call forwarding type notification message, or a calling number display/calling number display/restriction control signaling message, or a called number display/called number display/restriction control signaling message.

3. The method according to claim 1, further comprising
registering the CS domain user in the IMS domain, when the CS domain signaling messages are CS domain user location update messages, said registering further comprising steps of
mapping the received CS domain user location update messages into SIP registration messages and transmitting the messages to the CSCF entity by the AGCF entity; and
mapping a response message to the registration messages from the CSCF entity into a CS domain location update response message and transmitting the message to the MSC/VLR by the AGCF entity.

4. The method according to claim 3, further comprising
authenticating the CS domain user in the IMS domain when registering the CS domain user in the IMS domain, said authenticating being initiated by the CSCF entity under a local configuration data policy and comprising
mapping an authentication challenge request message in the IMS domain sent from the CSCF entity into a CS domain authentication challenge request message and transmitting the CS domain authentication challenge request message to the MSC/VLR by the AGCF entity; and
mapping a user terminal authentication challenge response message forwarded by the MSC/VLR into an IMS domain authentication challenge response message and transmitting the IMS domain authentication challenge response message to the CSCF entity by the AGCF entity.

5. The method according to claim 3, wherein when a CS domain user registers in the IMS domain, the AGCF entity obtains a mobility management signaling of the CS domain.

6. The method according to claim 5, wherein the step of the AGCF entity obtaining the mobility management signaling of the CS domain comprises
transmitting the messages transmitted between the CS domain MSC/VLR and the home location register (HLAR) to the AGCF entity and then the AGCF entity transferring the messages to a peer end; or
the CS domain MSC/VLR or the HLR transmitting the mobility management signaling of the CS domain directly to the AGCF entity.

7. The method according to claim 1, wherein when the CS domain signaling message forwarded by the MSC/VLR is a hand over message of the CS domain user, the AGCF entity maps the hand over message into an SIP message and then transmits the SIP message to a call session control function (CSCF) entity and the CSCF entity transfers the message to the service server in the IMS domain.

8. The method according to claim 1, wherein when the CS domain signaling message forwarded by the MSC/VLR is a CS domain originating party call request message, the AGCF entity maps the message into an SIP call request message and then transmits the SIP call request message to an object Serving CSCF (S-CSCF) entity and the object S-CSCF entity triggers the calling party service.

9. The method according to claim 8, wherein determination of the address of the object S-CSCF entity comprises steps of:
when the AGCF registers in the IMS domain for a calling party, a proxy CSCF (P-CSCF) entity determining the address of the object S-CSCF according to a path formed when the calling party registered in the IMS domain;
when the AGCF does not register in the IMS domain for a calling party, the P-CSCF entity determining the address of the object S-CSCF according to a local data configuration.

10. The method according to claim 1, wherein when the SIP signaling message transmitted from the IMS domain to the CS domain is a call request message aimed at a CS domain user, the object AGCF entity maps the call request message into a CS domain call request message and transmits the message to the current MSC/VLR of the called party.

11. The method according to claim 10, wherein determination of the address of the object AGCF entity comprises the steps of:
when the AGCF registers in the IMS domain for a called party, the CSCF entity determining the address of the object AGCF according to the information stored in the home subscriber server (HSS) and a path formed when the called party registered in the IMS domain;
when the AGCF does not register in the IMS domain for a called party, the CSCF entity determining the address of the object AGCF according to a local data configuration.

12. The method according to claim 10, wherein determination of the address of the current MSC/VLR of the called party comprises the step of:
when receiving the SIP call request message, the object AGCF entity queries a roaming number of the called party in the HLR and determining the address of the current MSC/VLR of the called party according to queried information.

13. The method according to claim 1, wherein when the AGCF maps the CS domain signaling message forwarded by the MSC/VLR to the SIP signaling message, the AGCF transforms a CS domain international mobile subscriber identification (IMSI) number of the user to IMS private user identity information and transforms the CS domain number to one or more IP multimedia public user identities (IMPU) in the IMS domain.

14. The method according to claim 1, wherein when the CS domain message transferred from the AGCF entity to the MSC/VLR is a special operation by the user, the message transmission between the MSC/VLR and the AGCF is performed through a unstructured supplementary services data (USSD) channel.

15. The method according to claim 1, wherein when the CS domain message received by the AGCF entity is a message constituted by signaling and media, the signaling message and the media message are separated and the media message is transmitted to a media gateway (MGW).

16. The method according to claim 15, wherein when the CS domain message received by the AGCF entity is a message constituted by signaling and media, the AGCF entity controls the MGW to modify media port and media stream.

17. The method according to claim 1, further comprising:
the AGCF entity performing renegotiation according to media stream redirection and change of the receiving and transmitting mode initiated by re-INVITE/UPDATE from a peer end; or
the AGCF entity receiving a call hold/resume notification realized by SIP UPDATE and opening/closing the transmission media channel according to session description protocol (SDP) indication and according to policy decision function (PDF) interaction; or
when the AGCF entity receives peer end transfer indication, the AGCF entity holding terminal thereof, establishing a new connection, switching the former connection to the new established one, according to subsequent indication and releasing a former connection; or
when the AGCF entity receives the SIP redirection indication, the AGCF entity reinitiating call establishment request towards new party, while holding the user status thereof, and playing an indication tone for the user thereof according to service requirement.

18. A communication system, comprising
an IMS domain network system, including a CSCF entity for routing and controlling calls;
an AGCF entity, set between the MSC/VLR and the CSCF entity, for mapping CS domain signaling messages forwarded by an MSC/VLR into SIP signaling messages and transmitting the SIP signaling messages to a CSCF entity, and for mapping SIP signaling messages transmitted from the CSCF entity to the CS domain into CS domain signaling messages and transmitting the CS domain signaling messages to the MSC/VLR;
the AGCF entity being connected with one or more MSCs/VLRs.

19. The communication system according to claim 18, wherein the AGCF entity further comprises:
a CS domain signaling processing module, for processing calls and mobility management messages between the MSC/VLR and the HLR;
a signaling transforming module, connected with the CS domain signaling processing module and IMS agent module, for transforming between the MSC/VLR, HLR CS domain signaling messages and the IMS SIP signaling messages;
an IMS agent module, the signaling transforming module, for registering, unregistering, periodically registering in the IMS domain, processing the response message, transmitting and receiving messages for the CS domain user.

20. The communication system according to claim 18, wherein an interface between the AGCF entity and the MSC/VLR is a call control interface or a mobile application part (MAP) interface.

21. The communication system according to claim 18, wherein the AGCF entity further includes a media gateway control (MGWC) unit connected with the CS domain MGW for controlling the MGW, and separating the message constituted by signaling and carrier transmitted from the MSC/VLR into signaling and media and transmit the media to the MGW.

22. An access gateway control function (AGCF) entity, comprising
a CS domain signaling processing module, for processing calls and mobility management messages between a MSC/VLR and a HLR;
a signaling transforming module, connected with the CS domain signaling processing module and IMS agent module, for transforming CS domain signaling messages of the MSC/VLR, HLR and IMS SIP signaling messages;
an IMS agent module, connected with the signaling transforming module, for registering, unregistering, periodically registering in the IMS domain, processing the response message, transmitting and receiving messages for the CS domain user.
